(19) Europäisches Patentamt
European Patent Office
Office européen des brevets

(11) **EP 1 039 282 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**22.12.2010 Patentblatt 2010/51**

(45) Hinweis auf die Patenterteilung:
**19.10.2005 Patentblatt 2005/42**

(21) Anmeldenummer: **00100147.8**

(22) Anmeldetag: **10.01.2000**

(51) Int Cl.:
*G01L 3/22* (2006.01)   *G01M 17/007* (2006.01)
*G01L 3/24* (2006.01)   *G01L 5/28* (2006.01)
*G01L 3/14* (2006.01)   *G01L 3/16* (2006.01)
*G01M 17/06* (2006.01)

(54) **Rollenprüfstand für Kraftfahrzeuge**

Roll test bench for vehicles

Banc d'essai à rouleaux pour véhicules

(84) Benannte Vertragsstaaten:
**DE GB IT**

(30) Priorität: **11.01.1999 DE 19900620**

(43) Veröffentlichungstag der Anmeldung:
**27.09.2000 Patentblatt 2000/39**

(60) Teilanmeldung:
**01129317.2 / 1 215 474**
**03007999.0 / 1 333 269**

(73) Patentinhaber: **MAHA-AIP GmbH & Co. KG**
**87490 Haldenwang (DE)**

(72) Erfinder: **Knestel, Anton**
**87496 Hopferbach (DE)**

(74) Vertreter: **MERH-IP**
**Matias Erny Reichl Hoffmann**
**Paul-Heyse-Strasse 29**
**80336 München (DE)**

(56) Entgegenhaltungen:
**EP-A- 0 573 302    EP-A2- 0 697 585**
**DE-A- 19 716 782    DE-B- 2 907 003**
**US-A- 5 522 257**

EP 1 039 282 B2

**Beschreibung**

Die Erfindung betrifft einen Rollen- bzw. Trommelprüfstand für Kraftfahrzeuge der im Oberbegriff des Patentanspruchs 1 angegebenen Gattung.

Bei der Prüfung von fahrdynamischen Parametern und auch der Abgaswerte von durch Brennkraftmaschinen angetriebenen Kraftfahrzeugen werden in neuerer Zeit komplexe Rollen- bzw. Trommelprüfstände eingesetzt, die eine Simulation unterschiedlicher Fahrbedingungen ermöglichen. Zur Durchführung von Untersuchungen beispielsweise der Bremsfunktionen, der Abgasemissionen od. dgl. wird das Prüffahrzeug im Rollenstand durch z.B. Gestänge fixiert, wobei je nach der Auslegung des Prüfstandes entweder die beiden Räder einer Achse oder aber die beiden Räder mehrerer Achsen auf dem Scheitelbereich je einer Trommel bzw. eines Rollenpäares aufstehen. Die Trommeln bzw. die Rollenpaare sind mit Antriebs-/Verzögerungsmaschinen gekoppelt, denen Meßelemente zum Erfassen der entsprechend den verschiedenen Prüfbedingungen auftretenden Drehmomente bzw. Zugkräfte zugeordnet sind.

Bei den zur Prüfung von Fahrzeugen mit sog. Allradantrieb verwendeten Prüfständen müssen die Laufrollen bzw. -trommeln für die Vorderräder und die Laufrollen bzw. -trommeln für die Hinterräder auch bei sich ändernder Prüfgeschwindigkeit mit gleicher Drehzahl bzw. Umfangsgeschwindigkeit umlaufen, weil bei etwa auftretenden Geschwindigkeitsdifferenzen zwischen den vorderen und hinteren Laufrollenpaaren die im Fahrzeug integrierte Elektronik zu Regeleingriffen veranlaßt werden kann. So sind normalerweise die Bremssysteme von Kraftfahrzeugen so ausgelegt, daß bei Betätigung des Bremspedals die Vorderräder stärker als die Hinterräder abgebremst werden. Bei einer Funktionsprüfung des Bremssystems des Prüffahrzeuges können die stärker abgebremsten Vorderräder die zugehörigen Laufrollen des vorderen Prüfsatzes stärker verzögern, mit der Folge, daß das fahrzeugeigene Antiblockiergerät auf einen zu starken Radschlupf schließt und die Bremskraft der Vorderräder entsprechend verringert. Wird umgekehrt beim Beschleunigen die Antriebsachse und über deren Räder das entsprechende Laufrollenpaar schneller als die nicht getriebene Achse, so kann dies ein Ansprechen des fahrzeugeigenen Antischlupfreglers auslösen, welcher dann die von der Brennkraftmaschine abgegebene Leistung verringert. Es liegt auf der Hand, daß derartige Regeleingriffe die gewünschten Meßergebnisse verfälschen.

In einem zur Funktionsprüfung unterschiedlicher Betriebsparameter von sog. Allrad-Fahrzeugen konzipierten Prüfstand müssen daher nicht nur die Fahrwiderstände, ausgedrückt in A-, B-, C-Koeffizienten, und die aus Beschleunigungen bzw. Verzögerungen resultierenden Kräfte und Momente der bewegten Massen erfaßt und geregelt werden, sondern es müssen auch die Umfangsgeschwindigkeiten der vorderen und hinteren Laufrollen bzw. -trommeln gleich gehalten werden, wobei eine winkelsynchrone Rotation der vorderen und hinteren Laufrollen bzw. -trommeln als optimal angesehen wird.

Aus der US 5 452 605 ist ein Trommelprüfstand für ein Kraftfahrzeug mit Einachs-Antrieb bekannt, bei dem ein einziger Prüfsatz zwei Lauftrommeln und eine mittlere elektrische Antriebsmaschine enthält, die in einem gemeinsamen Tragrahmen gelagert ist und beide Lauftrommeln direkt synchron antreibt. Das Statorgehäuse der Antriebs- bzw. Verzögerungsmaschine ist in zwei vertikalen Stützen des Tragrahmens pendelnd gelagert und zusätzlich über einen Drehmoment- bzw. Kraftsensor am Rahmen abgestützt. Wird beispielsweise bei einer Bremsprüfung des Kraftfahrzeuges die von dessen abgebremsten Rädern auf die Laufrollen übertragene Bremskraft in die Antriebsmaschine eingeleitet, dann reagiert das Statorgehäuse durch eine Verdrehung in den vom Drehmomentsensor bestimmten Grenzen, wobei das Reaktionsmoment des Statorgehäuses vom Drehmoment- bzw. Kraftsensor erfaßt wird. Änderungen des vom Statorgehäuse ausgeübten Drehmomentes werden somit vom Drehmomentsensor als Meßwerte erfaßt. Zur beidseitigen Lagerung des Statorgehäuses im Tragrahmen weist das Statorgehäuse an jeder Stirnseite einen Hohlzapfen auf, in denen über innere Wälzlager die mit den beiden Lauftrommeln verbundene Rotorwelle gelagert ist. Gegenüber dem Tragrahmen ist jeder Hohlzapfen über ein weiteres radial äußeres Wälzlager gelagert. Ein Nachteil dieser Lageranordnung besteht darin, daß im Stillstand der Antriebsmaschine kein Schmierfilm in den Wälzlagern vorhanden ist und die Lagerkörper sich direkt kontaktieren. Dies führt beim Anlaufen der Maschine zu extrem hohen Reibwerten und zu frühzeitigen Beschädigungen der Lageranordnung. Vergrößert wird dieser nachteilige Effekt noch dadurch, daß sich die Wälzkörper durch den bei laufender Maschine vorhandenen Körperschall in die Lagerschalen eingraben können.

Zur Überwindung dieser nachteiligen Effekte ist es aus der US 5 522 257 bekannt, zwei Wälzlager unter Zwischenschaltung eines Mittelrings koaxial übereinander zu montieren und die Mittelringe vor einem Einschalten der Antriebsmaschine über einen Riementrieb mit einer vorgegebenen Drehgeschwindigkeit anzutreiben, um in den beiden Wälzlagern bereits vor der Inbetriebnahme der Antriebsmaschine einen Schmierfilm zu erzeugen. Nachteilig ist allerdings, daß durch die Bewegung der Mittelringe dieser Lager eine Kraft eingeleitet wird, die sich zu dem während der Prüfung zu messenden Drehmoment addiert. Darüber hinaus erfordern die Doppellagerung und der Mittelring mit seinem Drehantrieb einen zusätzlichen technischen Aufwand.

Aus der DE-B-39 20 277 ist ein Rollenprüfstand für allradgetriebene Kraftfahrzeuge bekannt, mit dem auch sog. Giermomente um die Fahrzeughochachse simuliert und erfaßt werden können. Jedes Vorderrad und jedes Hinterrad des zu prüfenden Kraftfahrzeuges ist auf jeweils einem Rollenpaar abgestützt. Um die Räder einzeln antreiben und abbremsen zu können, wird jedes Rollenpaar von einer eigenen Antriebsmaschine angetrieben, wobei zwischen jeder Rolle und der zugehörigen Maschine ein Drehmomentsensor angeordnet ist. Den Antriebsmaschinen sind Stromrichter vorgeschaltet, die jeweils von einem zugehörigen Regelverstärker angesteuert werden. Zur Messung der Drehgeschwindigkeiten der einzelnen Maschinen dienen Tachogeneratoren, wobei jeweils ein Tachogenerator, ein Regelverstärker, ein Stromrichter und eine Antriebsmaschine Bauteile je eines Drehzahlregelkreises sind und alle Regelkreise an einen als Prozeßrechner oder programmierbares Steuergerät ausgebildeten Prozessor angeschlossen sind. Für die Simulation einer Kurvenfahrt können mit Hilfe dieses Prozessors auf der Grundlage einer gewünschten Fahrgeschwindigkeit die dieser Kurvenfahrt entsprechenden unterschiedlichen Umfangsgeschwindigkeiten der kurveninneren bzw. kurvenäußeren Trommeln bestimmt werden.

DE 197 16 782 A1 offenbart Pendelmaschinen mittels hydrostatischer Lager praktisch reibungsfrei zu lagern, wobei eine Beaufschlagung der Lager mit konstantem Öldruck und eine konische Ausführung der Lager vorgeschlagen wird, um eine asymmetrische Lagerlast durch das (konstante) Maschinengewicht zu berücksichtigen.

Aufgabe der Erfindung ist es, einen Rollenbzw. Trommelprüfstand zu schaffen, der bei konstruktiv verringertem Aufwand genauere Meßergebnisse liefert.

Diese Aufgabe wird erfindungsgemäß durch einen Prüfstand gemäß dem unabhängigen Patentanspruch 1 gelöst. Die abhängigen Ansprüche betreffen vorteilhafte Ausgestaltungen der Erfindung.

Gemäß der Erfindung weisen die Lageranordnungen konstruktiv einfache Gleitlager auf, in deren Lagerteilen (Lagerschalen) taschenförmige bzw. nutartige Vertiefungen eingearbeitet sind, die mit einem im wesentlichen konstanten tragenden Druckölstrom beaufschlagt werden. Zwischen den Gleitflächen jedes Lagers entwickelt sich ein ggf. filmartiges Druckmittelpolster von hoher Tragfähigkeit und vernachlässigbaren Reibungswerten gegenüber den relativ geringfügigen Pendelbewegungen des Maschinengehäuses im Tragrahmen. Die vom Maschinengehäuse bei einem Prüfvorgang ausgeübten Drehmomente werden dadurch fehlerfrei vom Kraftmesser erfaßt. Eine dieser Lageranordnungen ist zweckmäßig als axiales Festlager ausgebildet und weist zusätzlich zu dem mit den Tragtaschen versehenen Radialdrucklager ein Axialdrucklager mit eingearbeiteten Taschen auf. Durch diese quasi schwimmende Lagerung des Statorgehäuses werden die bei den herkömmlichen Wälzlagerungen auftretenden Reibungseinflüsse sowie auch Verschleißerscheinungen der Lagerteile vermieden. Beim Einleiten von radialen Kräften, z.B. durch das Gewicht eines aufgefahrenen Fahrzeuges, wird die jeweils innere Lagerschale nach unten gedrückt, wodurch sich die Spaltweiten der unteren Hälfte dieser Traglager verringern und damit die Stützeigenschaft zunimmt.

Zweckmäßig kann je eine Lagerschale jedes Gleitlagers mit einer inneren ggf. PTFE-haltigen Gleitschicht ausgestattet sein, in welcher Nuten netzartig eingearbeitet sind. Das durch diese flachen Nuten zugeführte Druckmittel bildet einen großflächigen dünnen Film von hoher Tragfähigkeit und minimalen Reibwerten.

Zur Erzeugung der Ölströme kann entweder pro Tragtasche ein separates Pumpensegment verwendet werden oder als konstruktiv einfachere Variante kann eine gemeinsame Druckölversorgung mit nur einer einzigen Pumpe und individuellen Regelelementen für die einzelnen Teilströme vorgesehen sein. Gemäß einem Beispiel, welches das Verständnis der Erfindung erleichtert, von den Ansprüchen in seiner Gesamtheit aber nicht erfasst ist ,können durch Auslegung von volumenstromregelnden Ventilen zur Erzielung einer etwa mittleren Lagerhärte ein konstanter Druckölfluß, zur Erzielung einer relativ harten Lagerstelle ein mit wachsendem Gegendruck ansteigender Durchfluß oder zur Erzielung einer weichen Lagerstelle ein bei steigendem Gegendruck verringerter Durchfluß eingestellt werden. Mit diesen Variationsmöglichkeiten wird eine gegenüber Wälzlagerungen wesentlich verbesserte Laufruhe erreicht, was beispielsweise bei Geräuschuntersuchungen des Prüffahrzeuges von erheblicher Bedeutung sein kann.

Eine weitere Lageranordnung für das Statorgehäuse kann so augebildet sein, daß beidseitig mehrere winkelversetzt angeordnete und in Umfangsrichtung nachgiebige Blattfederelemente mit ihrem radial äußeren Ende an einem in dem Tragrahmen fixierten Kranz und mit ihrem radial inneren Ende an einem vorstehenden Bauteil jeder Stirnwand des Statorgehäuses befestigt sind. Diese Blattfederelemente sind so ausgelegt, daß sie den relativ kleinen Verdrehbewegungen des Statorgehäuses nur einen vernachlässigbar kleinen Widerstand entgegensetzen und nahezu ausschließlich nur Gewichtskräfte aufnehmen.

Zur weiteren Steigerung der Meßgenauigkeit kann der zwischen dem Statorgehäuse und der Rahmenkonstruktion angeordnete Kraftmesser als Kraftmeßdose ausgebildet sein, deren eines Funktionsglied einen Kolben aufweist, welcher in einem beidseitig mit einem Druckölstrom beaufschlagten Zylinder schwimmend abgestützt ist. Durch diese schwimmende Abstützung des Funktionsgliedes der Kraftmeßdose werden die bei herkömmlichen Abstützungen unvermeidlichen Meßfehler vermieden, die sich durch Reibung im Mehrgelenk-Gestänge sowie Verkantungen in Teleskop-Gestängen ergeben. Bei den herkömmlicherweise als Gelenkösen ausgebildeten und als einfache Gleitlager wirkenden Ausführungen werden durch Haftreibung schräge Kräfte in die Kraftmeßdose eingeleitet, welche die Meßwerte verfälschen können. Die verwendete Kraftmeßdose ist einerseits am pendelnd gelagerten Statorgehäuse der Antriebsmaschine oder an dem Tragrahmen befestigt und andererseits mit dem Kolben verbunden, der in dem flachen entweder am Tragrahmen oder aber am Statorgehäuse befestigten Zylinder aufgenommen ist. Die Oberseite und die Unterseite des Kolbens werden mit je einem vorzugsweise konstanten Druckölvolumenstrom beaufschlagt, der entweder von einer separaten Pumpe oder aber von der Druckölversorgung für die Lageranordnungen bereitgestellt wird. Die Regelung bzw. Dosierung des Druckölvolumens und des geeigneten Flüssigkeitsdruckes erfolgt über geeignete Regelglieder, welche eine schwimmende Abstützung des Kolbens gewährleisten und Anschläge an der Zylinderwandung verhindern.

Damit zum Prüfen von Fahrzeugen mit mehreren angetriebenen Achsen die Position der beiden Prüfsätze den unterschiedlichen Radständen der zu prüfenden Fahrzeuge angepaßt werden kann, kann ein erster Prüfsatz ortsfest und der zweite Prüfsatz in Längsrichtung verfahrbar in einer gemeinsamen Grube angeordnet sein, wobei jeder Prüfsatz aus einem Tragrahmen, einer mittigen elektrischen Antriebsmaschine mit pendelnd im Tragrahmen gelagertem Statorgehäuse und aus zwei seitlichen großvolumigen Trommeln besteht, die von der beidseitig vorstehenden Maschinenwelle direkt synchron angetrieben bzw. abgebremst werden.

Zur tragenden Abdeckung der sich bei den Verfahrbewegungen des zweiten Prüfsatzes ergebenden Freiräume der Grube sind vorteilhaft an den Auffahrplatten dieses zweiten Prüfsatzes in Längsrichtung jalousieartig flexible quersteife Tragbänder befestigt, welche die zum Auf- und Abfahren des Prüfwerkzeuges erforderlichen Fahrstreifen von variabler Länge bilden.

Um auch bei größeren Fahrstrecken die Grubentiefe klein zu halten, können die freien Endabschnitte dieser vorzugsweise aus Gliederketten mit Tragplatten bestehenden Tragbänder in je einem Speicher innerhalb der Grube aufgenommen sein, in welchem sie U-förmig umgelenkt werden.

Ein Prüfstand zum Prüfen von einachsig angetriebenen Kraftfahrzeugen bei stillgelegter Bordelektronik (ABS, ASR, usw.) zeichnet sich durch einen einzigen Prüfsatz der vorstehend beschriebenen Bauart aus, der in einer relativ langen Grube motorisch längsverfahrbar ist und die jalousieartigen Abdeckungen aufweist.

Um erhöhte Abstrahlungen des prüfstandseigenen Körperschalls zu verhindern, kann jeder Prüfsatz auf Dämpfern schwingungsisoliert auf dem Grubenboden abgestützt sein. Zusätzlich können die Überfahrplatten inklusive einer jeweiligen Zentriereinrichtung für das auffahrende Fahrzeugrad als separate Module ausgebildet und unabhängig vom jeweiligen Prüfsatz am Grubenrand befestigt werden. Durch diese lokale und konstruktive Trennung zwischen jedem Prüfsatz und den Überfahr-Bauteilen ergibt sich die Möglichkeit, den Oberbau mit zusätzlichen Schall- bzw. Wärmeisolierungen auszurüsten. Insbesondere bei Prüfungen in Klimakammern müssen durch eine derartige Isolierung die Prüfsätze mit ihren Antriebsmaschinen und den entsprechenden Meßmitteln nicht den gleichen tiefen Temperaturen wie das zu prüfende Fahrzeug ausgesetzt werden.

Hinsichtlich konstruktivem Aufwand und Betriebssicherheit ist es vorteilhaft, wenn als Antriebsmaschinen statt der bisher eingesetzten Gleichstrom- bzw. Asynchronmaschinen Synchronmaschinen eingesetzt werden, die unter Verwendung von Frequenzumrichtern parallel betrieben werden. Die Ausgangsfrequenz $f_d$ des Umrichters wird nach der folgenden Formel bestimmt:

$$f_d = \frac{\Sigma\, F \cdot t}{m \cdot U \cdot P}$$

In dieser Formel bedeuten:

$\Sigma F$ = Summe aller Kräfte (N)
$t$ = Zeit (s)
$m$ = zu simulierende Masse (kg)
$U$ = Umfang der jeweiligen Laufrolle (m)
$P$ = Polpaarzahl der Synchronmaschine

Auf der Grundlage des zweiten Newton'sches Gesetzes bestimmt sich die Prüfgeschwindigkeit aus der Summe der auftretenden Kräfte dividiert durch die simulierte Fahrzeugmasse. Über den Durchmesser der Trommeln wird die Wellendrehzahl ermittelt und unter Einbeziehung der Polpaarzahl der Antriebsmaschinen ergibt sich ein direkter Bezug der ermittelten Umrichterfrequenz zur Prüfgeschwindigkeit. Meßfühler zum Erfassen von Drehzahlen und/oder Geschwindigkeiten sind nicht notwendig, was einen wesentlichen Vorteil gegenüber den herkömmlichen Systemen mit mehreren Tachogeneratoren darstellt.

Die Erregung der Synchronmaschinen kann über Schleifringe oder über einen magnetischen Überträger erfolgen. Von besonderem Vorteil ist die Anwendung von permanent erregten Maschinen. Um die bei Synchronmaschinen bekannten Pendelschwingungen möglichst zu unterdrücken, können spezielle Dämpferstäbe z.B. als Kurzschlußwicklungen eingebaut werden. Durch die Fremderregung der Maschinen laufen alle Motorwellen frequenzsynchron, wobei durch die zusätzlich zur permanenten Erregung angebrachten Kurzschlußwicklungen die unerwünschten Pendelschwingungen der jeweiligen Antriebsmaschine minimiert werden.

Ein anderes besonders zweckmäßiges System zur Erzielung eines Synchronlaufes der Antriebsmaschinen und der ihnen zugeordneten Lauftrommeln zeichnet sich dadurch aus, daß die rotierenden Drehmassen dadurch erhöht bzw. erniedrigt werden, indem entsprechend den jeweils auftretenden Winkelbeschleunigungen Kräfte simuliert werden, die zu den Massenträgheitskräften hinzuaddiert oder abgezogen werden. Die entsprechenden zusätzlichen elektrisch simulierten Massen errechnen sich nach der folgenden Gleichung:

$$F_{soll} = F_{abc} + \left(m \cdot \frac{dv}{dt}\right).$$

$F_{soll}=$ die von den Antriebsmaschinen aufzubringende Zugkraft (N)

$F_{abc}=$ Zugkraft der Fahrwiderstände (N)

m = zu simulierende Masse

dv = Geschwindigkeitsänderung

dt = Zeiteinheit

Der Vorzug dieser Simulation ist, daß auch beliebig kleine oder gar keine simulierten Massen eingestellt werden können. Ein Nachteil des aus der DE-B-39 20 277 bekannten Verfahrens besteht darin, daß hier keine beliebig kleinen Massen simuliert werden können, da eine Masse "Null" bei dem hier angewandten Berechnungsverfahren eine Division durch Null ergeben würde. Dementsprechend müssen bei diesem bekannten Verfahren die rotierenden Massen des Prüfstandes relativ klein gehalten werden, so daß die für das Fahrzeug zu simulierenden Massen entsprechend groß sein müssen. Dies hat jedoch den Nachteil, daß die Antriebsmaschinen einen relativ großen Anteil der Fahrzeugmasse simulieren und dementsprechend groß dimensioniert sein müssen. Um relativ kleinere und kostengünstigere Antriebsmaschinen einsetzen zu können und ein verbessertes Ansprechverhalten bei erhöhter Genauigkeit zu erzielen, sollte die Differenz zwischen den mechanisch rotierenden Massen und den zu simulierenden translatorischen Fahrzeugmassen möglichst klein gehalten werden.

Gleichzeitig ist ein synchroner Lauf der Trommeln für die Vorderräder und der Trommeln für die Hinterräder erforderlich, wobei die Funktion der Massensimulation gewährleistet bleiben muß. Dies kann dadurch erreicht werden, daß die Drehwinkel der vorderen und der hinteren Antriebsmaschine erfaßt werden. Durch Subtraktion dieser beiden Drehwinkel wird eine Winkeldifferenz gebildet, die auf einen PID-Regler geschaltet wird. Das von diesem PID-Regler erzeugte Ausgangssignal wird zu dem Stellsignal für den einen Antriebsmotor addiert und vom Stellsignal für den zweiten Antriebsmotor subtrahiert. Dadurch bleibt die Summe der Drehmomente für die Massensimulation gleich.

Statt der sonst üblichen Inkrementalencoder können als Drehwinkelfühler sog. Sinus-/Cosinus-Encoder verwendet werden. Diese haben gegenüber den digitalen Encodern den Vorteil, daß über den analogen Spannungswert des Sinus-/Cosinus-Signals eine entsprechend hohe Auflösung für die Winkeldifferenz erreicht wird. Aus dem Sinus-/Cosinus-Signal kann durch einfachen Schmitt-Trigger wieder ein normales Quadratur-Signal erzeigt werden, daß z.B. für die Vektorregelung der jeweiligen Antriebsmaschine verwendet werden kann.

Anstelle der Drehwinkel der beiden Antriebsmaschinen kann auch die Umfangsgeschwindigkeit der beiden Laufrollen voneinander subtrahiert werden. Die Differenzgeschwindigkeit wird wie zuvor auf einen PID-Regler geschaltet und das so erzeugte Stellsignal zum Stellsignal des Fahrwiderstandsreglers addiert bzw. von der jeweils anderen Seite subtrahiert. Dieses System bietet zwar im Gegensatz zu den vorstehend beschriebenen Winkelregelungen nur zwei konstante Prüfgeschwindigkeiten (keinen Winkelsynchronumlauf der Trommeln), es kommt jedoch mit einfacheren Geschwindigkeitsmeßelementen aus.

Ferner können auch die Wegstrecken der beiden Trommeln voneinander subtrahiert werden. Die Wegstreckendifferenz wird wie zuvor auf einen PID-Regler geschaltet und das so erzeugte Signal wird zum Stellsignal des Fahrwiderstandsreglers für die eine Antriebsmaschine addiert und für die zweite Antriebsmaschine subtrahiert.

Weitere Besonderheiten und Vorzüge der Erfindung lassen sich den Zeichnungen und der folgenden Beschreibung bevorzugter Ausführungsbeispiele entnehmen. Es zeigen:

Fig. 1 einen Trommelprüfstand gemäß der Erfindung zur Prüfung von zweispurigen Kraftfahrzeugen mit Zwei- und Vier-Rad-Antrieb in Seitenansicht;

Fig. 2 einen Teil eines Trommelprüfstandes zur Prüfung von Kraftfahrzeugen mit Zwei-Rad-Antrieb in schematischer Seitenansicht;

Fig. 3 den Trommelprüfstand nach Fig. 1 in Draufsicht;

Fig. 4 eine Überfahr- und Zentriervorrichtung in ihrer Betriebsstellung und in der Ruhelage;

Fig. 5 einen im Trommelprüfstand nach Fig. 1 bzw. 2 eingesetzten Prüfsatz;

Fig. 6 den Prüfsatz nach Fig. 1 in schematischer Stirnansicht;

Fig. 7 schematisch und vergrößert eine Druckmeßdose mit hydraulischer Abstützung;

Fig. 8 schematisch eine Gleitlageranordnung für das Statorgehäuse im schematischen Axialschnitt und im Querschnitt;

Fig. 9 eine weitere Ausführung einer Lageranordnung für das Statorgehäuse im Axialschnitt;

Fig. 10 die Steuereinrichtung für zwei Antriebsmaschinen eines Rollenprüfstandes im regelungstechnischen Blockschaltbild;

Fig. 11 eine andere Steuereinrichtung für die beiden Antriebsmaschinen eines Trommelprüfstandes im Blockschaltbild.

Bei den im folgenden beschriebenen Prüfständen handelt es sich um komplexe Anlagen, die vorzugsweise von den Automobilherstellern zur Untersuchung verschiedenster Fahrzeugparameter insbesondere bei der Entwicklung neuer Fahrzeugtypen eingesetzt werden.

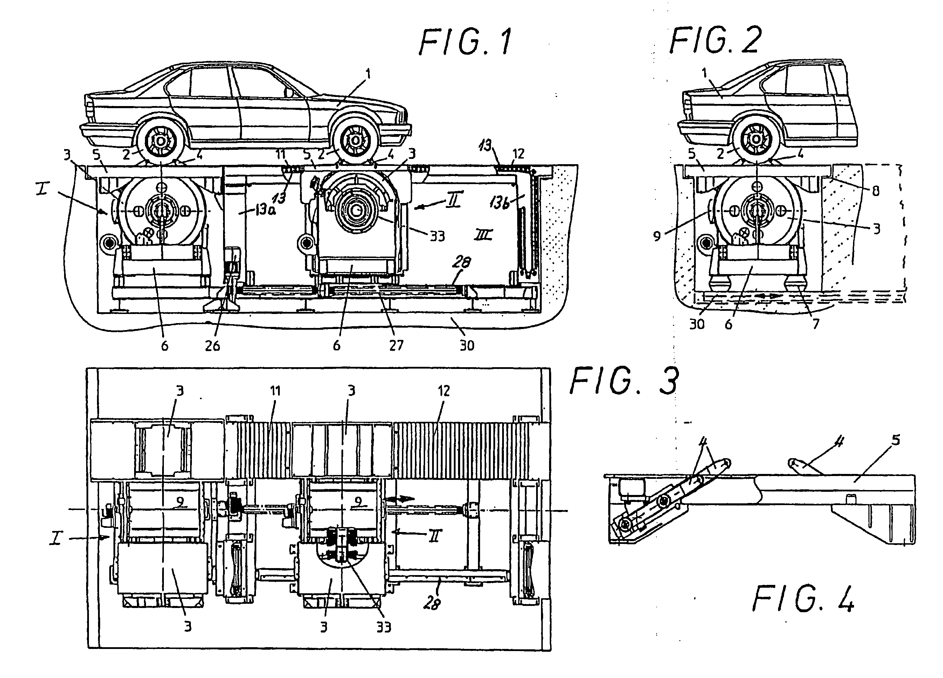

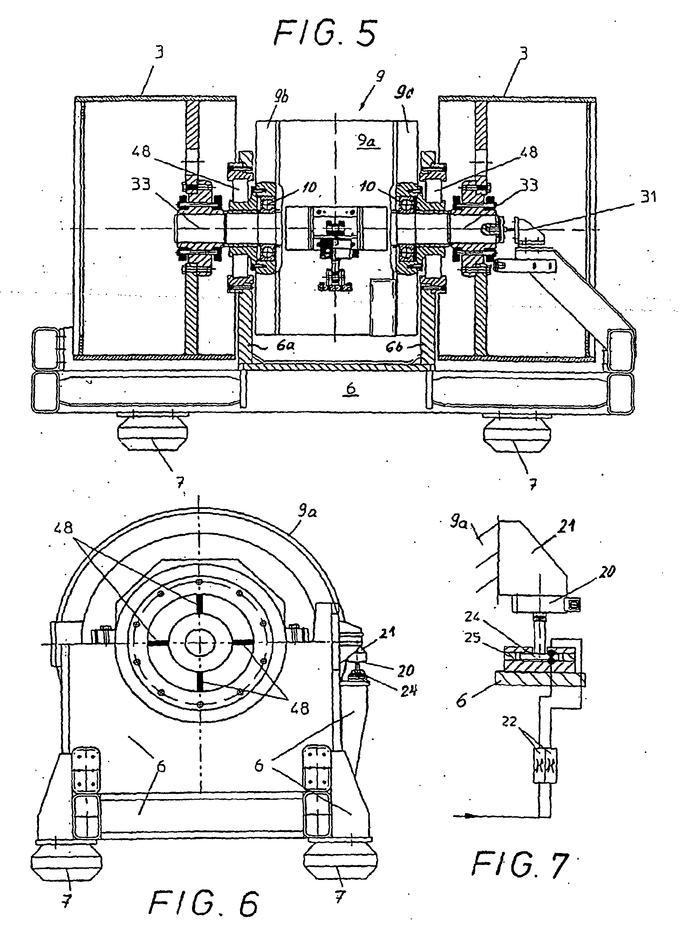

Der in den Figuren 1 und 3 dargestellte Trommelprüfstand ist zur Prüfung von zweispurigen Kraftfahrzeugen mit einer oder zwei angetriebenen Achsen konzipiert und verfügt über zwei in einer gemeinsamen Grube III angeordnete Prüfsätze I und II, von denen der eine Prüfsatz I ortsfest montiert und der zweite Prüfsatz II zur Anpassung an unterschiedliche Fahrzeuglängen auf einem geeigneten Unterbau in der Grube längsverfahrbar ist. Jeder Prüfsatz I und II enthält zwei Trommeln 3, deren Durchmesser hier etwa dem zweifachen Durchmesser eines Fahrzeugrads 2 entspricht, und eine gemeinsame Antriebsmaschine 9 in sog. Pendelausführung, die mittig zwischen den beiden Trommeln 3 angeordnet ist und beide Trommeln 3 über eine gemeinsame Welle 33 direkt antreibt (vgl. Fig. 5) . Die bewegten Massen der Prüfsätze sind auf die Massen der zu prüfenden Fahrzeuggattung abgestimmt.

Der Trommelprüfstand nach Fig. 2 verfügt nur über einen einzigen Prüfsatz, der in Aufbau und Funktion dem ortsfesten Prüfsatz I oder dem fahrbaren Prüfsatz II in Fig. 1; 3 entspricht. Die längsverfahrbare Ausbildung ermöglicht die jeweils optimierte Durchführung bestimmter Prüfvorgänge ohne Änderung der Fahrzeugposition.

Nachdem beim Prüfstand nach Fig. 1; 3 der längsverfahrbare Prüfsatz II in seiner durch den Typ des zu prüfenden Fahrzeugs vorgegebenen Stellung in der Grube III positioniert wurde, wird ein Fahrzeug 1 in den Prüfstand eingefahren, so daß seine Vorderräder 2 auf dem Scheitelbereich je einer Trommel 3 des Prüfsatzes II und seine Hinterräder 2 auf dem Scheitelbereich je einer Trommel 3 des ersten Prüfsatzes I aufstehen. Zum genauen Einrichten des Fahrzeugs 1 bzw. seiner Räder 2 dienen die in Fig. 4 dargestellten Richtvorrichtungen. Jede dieser Richtvorrichtungen hat zwei gegensinnig unter einem spitzen Winkel geneigte Stützstreben 4, die in Längsrichtung mechanisch oder hydraulisch so verstellbar sind, daß ihre balligen freien Enden am Rad bzw. Reifen in der in Fig. 1 dargestellten Weise angreifen. Die Stützstreben 4 können nach dem Richtvorgang in eine Ruhelage unterhalb einer jeweiligen Überfahrplatte 5 zurückgestellt werden.

Wie aus den Figuren 1 bis 3 ersichtlich, bilden die Überfahrplatte 5 mit u.a. der Richtvorrichtung 4 jeweils einen eigenständigen Oberbaumodul, der ohne mechanische Verbindung zu dem zugehörigen Prüfsatz I bzw. II separat am Grubenrahmen befestigt ist. Dadurch wird eine mechanische und akustische Entkopplung der Prüfsätze von der das Fahrzeug aufnehmenden Tragkonstruktion erreicht, was eine erhebliche Verminderung von Geräuschemissionen und anderen unerwünschten Einflüssen bewirkt. Zur weitergehenden Verringerung dieser Einflüsse können die Module bzw. deren Bauteile 4, 5 mit Isolier- oder Dämpfungsmitteln versehen sein.

Zum Einstellen der vorgegebenen Position des längsverfahrbaren Prüfsatzes II ist ein Motor 26 in der Grube III fest montiert, der über einen Lineartrieb 27, z.B. eine Gliederkette, an einem stabilen Bauteil des Prüfsatzes II angreift. Dieser Prüfsatz II ist mit seinem Tragrahmen 6 auf zwei in der Grube III verlegten Längsschienen 28 abgestützt, auf denen der Prüfsatz II durch den Betrieb des Motors 26 verschoben werden kann.

Wie aus Fig. 1 und dem oberen Teil der Fig. 3 ersichtlich, sind an den beiden Überfahrplatten 5 des längsverfahrbaren Prüfsatzes II eine vordere und eine hintere stabile Gliederkette 13 mit oberseitigen schmalen profilierten Tragplatten 11, 12 befestigt. Die Länge der schmalen Tragplatten entspricht der Breite der Überfahrplatten 5. Die Gliederketten 13 mit ihren Tragplatten 11, 12 bilden die jalousieartigen Fahrstreifen vor und hinter dem längsverfahrbaren Prüfsatz II. An dem in Fig. 1 rechten Ende sowie zwischen den beiden Prüfsätzen I und II ist in der Grube III je ein Speicher 13a, 13b vorgesehen. Je nach der Position des Prüfstandes II wird einer der Endabschnitte der vorderen bzw. hinteren Gliederkette 13 mit den Tragplatten in jeweils einem dieser Speicher 13a, 13b unter Bildung einer in Fig. 1 dargestellten Schlaufe aufgenommen. Diese Speicher ermöglichen somit auch bei langen Verfahrwegen des Prüfsatzes II eine relativ geringe Tiefe der Grube III.

In den Figuren 5 und 6 ist eine Ausführung eines Prüfsatzes im einzelnen dargestellt. Der Prüfsatz besitzt einen stabilen Tragrahmen 6, der entweder am ortsfesten Unterbau (Prüfsatz I) oder an dem über den Linearantrieb 27 verfahrbaren Unterbau (Prüfsatz II) befestigt sein kann. Zur Dämpfung und Isolation kann die Abstützung des jeweiligen Prüfsatzes über Dämpfungselemente 7 erfolgen.

Zwischen zwei stabilen Tragwänden 6a, 6b des Tragrahmens 6 ist die vorzugsweise als elektrischer Synchronmotor ausgebildete Antriebsmaschine 9 angeordnet, auf deren beidseitig vorstehender Welle 33 je eine Trommel 3 befestigt ist. Das Statorgehäuse 9a der Antriebsmaschine 9 weist in jeder Stirnwand 9b, 9c ein Wälzlager 10 für die Welle 33 und eine abstehende Lagerhülse auf, an welcher die radial inneren Enden von vier um jeweils 90° winkelversetzten Blattfedern 48 befestigt sind. Die radial äußeren Enden dieser als Spannbänder wirkenden Federelemente 48 sind an einem Kranz befestigt, der in einer Kreisöffnung der jeweiligen Tragwand 6a, 6b fest montier ist.

Diese Blattfedern 48 bilden eine allseitige Aufhängung für die aus der Antriebsmaschine 9 und den beiden Trommeln 3 bestehenden Baugruppe im Tragrahmen 6, wobei diese Blattfedern 48 nur die Gewichtskräfte dieser Baugruppe 3, 9 in den Tragrahmen 6 übertragen. Die Blattfedern 48 sind so ausgelegt und ausgerichtet, daß sie die im Prüfbetrieb auftretenden kleinen Drehbewegungen des Statorgehäuses 9a der Antriebsmaschine 9 nicht bzw. nur unwesentlich beeinflussen.

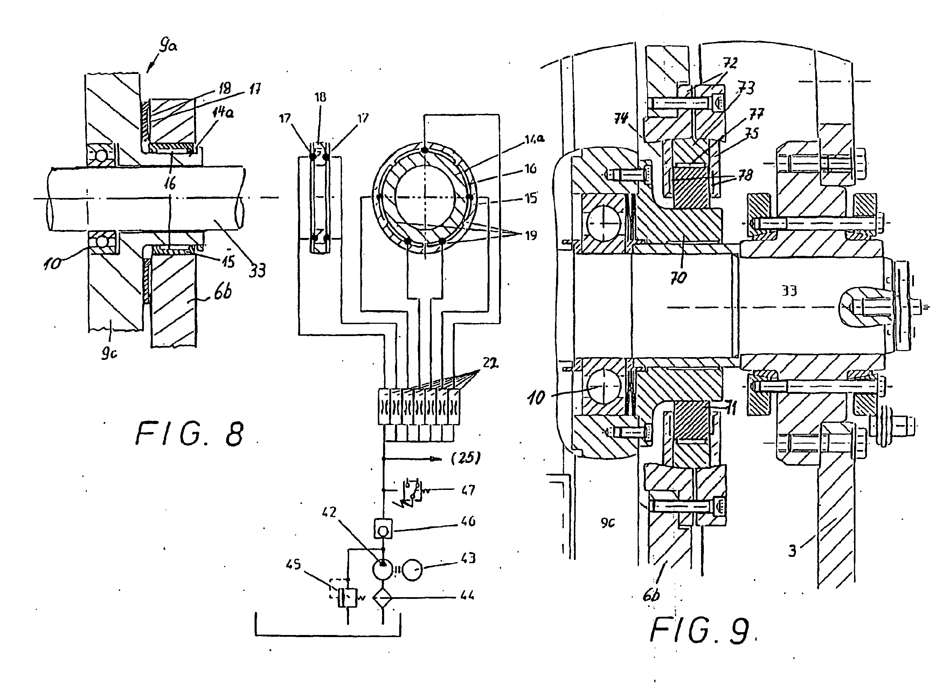

Eine andere Lageranordnung des Statorgehäuses 9a in der einen Wand 6b des Tragrahmens 6 ist in Fig. 8 schematisch im Axialschnitt und im Querschnitt zusammen mit einer Druckölversorgung gezeigt. Die Welle 33 ist in einem Wälzlager 10 in der jeweiligen Stirnwand 9b, 9c gelagert. Eine an der jeweiligen Stirnwand 9b bzw. 9c angeformte Hülse 14a bildet ein radial inneres Gleitlagerelement. In einer Öffnung der Tragwand 6b ist ein Lagerring 15 befestigt, in dem über den Umfang verteilte Taschen 16 eingearbeitet sind, die durch Stege 19 voneinander getrennt sind. Im linken Axialschnitt der Fig. 8 ist ein weiterer Lagerring 18 gezeigt, der zwischen der Außenfläche der Stirnwand 9c des Statorgehäuses 9a und der dieser zugekehrten Seitenfläche der Seitenwand 6b des Tragrahmens 6 angeordnet ist. Auch dieser Lagerring 18 weist nutenförmige Öltaschen 17 an einer oder an beiden Stirnseiten auf. Die Öltaschen 16, 17 werden über gesonderte Leitungen mit Druckflüssigkeit beaufschlagt.

Die Drehmomentabstützung des Statorgehäuses 9a erfolgt über eine Kraftmeßdose 20, die gemäß Fig. 6, 7 an einem seitlichen Ansatz 21 des Statorgehäuses befestigt ist. Das Funktionsglied dieser Kraftmeßdose 20 ist über eine Stange mit einem Kolben 24 verbunden, der in einem am Tragrahmen 6 befestigten flachen Zylinder 25 schwimmend aufgenommen ist. Jede Kolbenstirnfläche wird mit einem geregelten Druckölstrom beaufschlagt, der von einer in Fig. 8 schematisch dargestellten Druckölversorgung über Regelventile 22 oder auch aus einer eigenständigen Versorgungseinrichtung zugeführt werden kann.

Die Druckölversorgung für die Gleitlager 14, 15, 18 und für den Kolben 24 der hydraulischen Abstützung der Kraftmeßdose 20 umfaßt bei dem bevorzugten Ausführungsbeispiel eine von einem Motor 43 angetriebenen Ölpumpe 42, die Hydrauliköl aus einem Sammelbehälter über einen Filter 44 ansaugt und über eine Rückschlagventil 46 in das Leitungssystem drückt. Das überschüssige Hydrauliköl wird aus den Lagerstellen zum Sammelbehälter über ein Druckbegrenzungsventil 45 zurückgeführt, das einen ausreichenden und ggf. einstellbaren hydrostatischen Druck in den Lagerteilen gewährleistet. Zur individuellen Dosierung und Steuerung des Drucklölstromes zu den verschiedenen Lagerstellen und zum Zylinder sind in den Zweigleitungen Reglerbaugruppen 22 eingeschaltet. Ein Druckschalter 47 in einer Rücklaufleitung gewährleistet einen zur reibungsfreien Lagerung ausreichenden Öldruck in den Gleitlagern 14, 17 und zur schwimmenden Abstützung des Kolbens 24 im Zylinder 25 einen konstanten Volumenstrom. Das aus den Lagerstellen bzw. dem Zylinder austretende Öl wird über nicht dargestellte Rücklaufleitungen zum Sammelbehälter zurückgeführt.

Eine andere Ausführung der Gleitlageranordnung ist in Fig. 9 in vergrößertem Axialschnitt dargestellt. Wie bei der vorstehend beschriebenen Gleitlageranordnung ist auch bei dieser Ausführung die Welle 33 beidseitige in den Stirnwänden 9b, 9c des Statorgehäuses 9a in je einem Wälzlager 10 gelagert. An der Außenseite der Lagerbohrung in der Stirnwand 9c ist eine Buchse 70 angeflanscht, auf der ein Lagerring 71 sitzt. In der Aufnahmeöffnung der Tragwand 6b ist ein zweiteiliger Spannring 72 mit bogenförmiger Innenfläche angeordnet, der einen Lagerring 73 und zwei diesem benachbarte Lagerscheiben 74, 75 mit jeweils balligen Außenflächen umschließt. Durch Anziehen von Spannschrauben 76 wird der Spannring 72 an der Tragwand 6b befestigt, wobei gleichzeitig eine Klemmung der beiden Lagerscheiben 74, 75 und des Lagerrings 73 in einer optimierten Ausrichtung erfolgt. In den beiden Lagerscheiben 74, 75 und in dem Lagerring 73 sind nutenförmige Öltaschen 77, 78 ausgebildet, die mit einer vorstehend beschriebenen Druckölversorgung in Strömungsverbindung stehen.

Bei den Lageranordnungen nach Fig. 8 und 9 wird vor dem Einschalten der Antriebsmaschine 9 in den Öltaschen ein hydraulischer Druck aufgebaut, so daß das Statorgehäuse 9a reibungslos und praktisch spielfrei in den beiden Tragwänden 6a, 6b des Tragrahmens 6 gelagert ist. Die im Prüfbetrieb auftretenden Drehbewegungen des Statorgehäuses 9a können somit verlustlos in die Druckmeßdose 20 eingeleitet werden, wodurch sich die Genauigkeit der Drehmomenterfassung wesentlich erhöht.

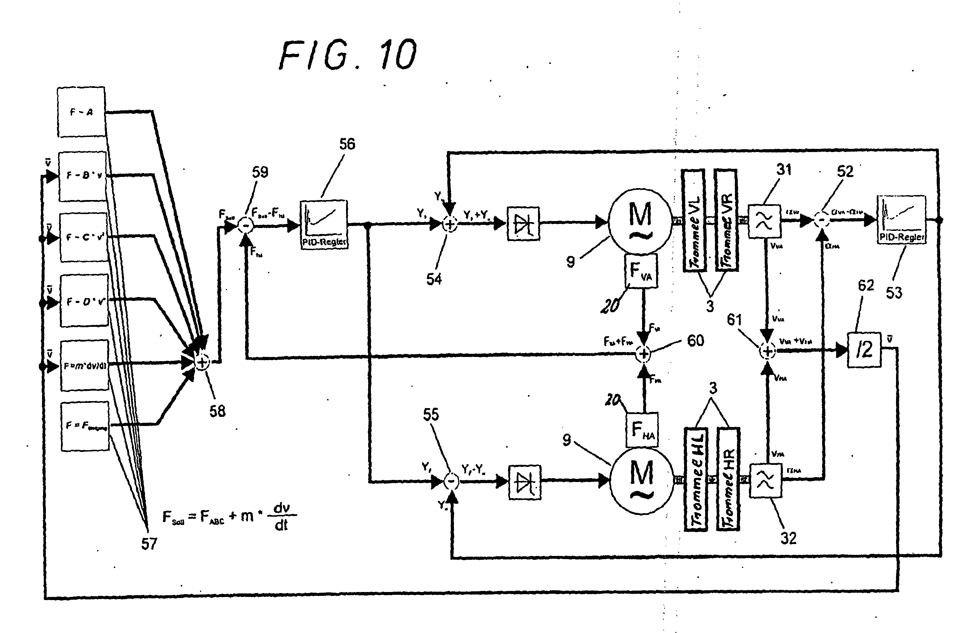

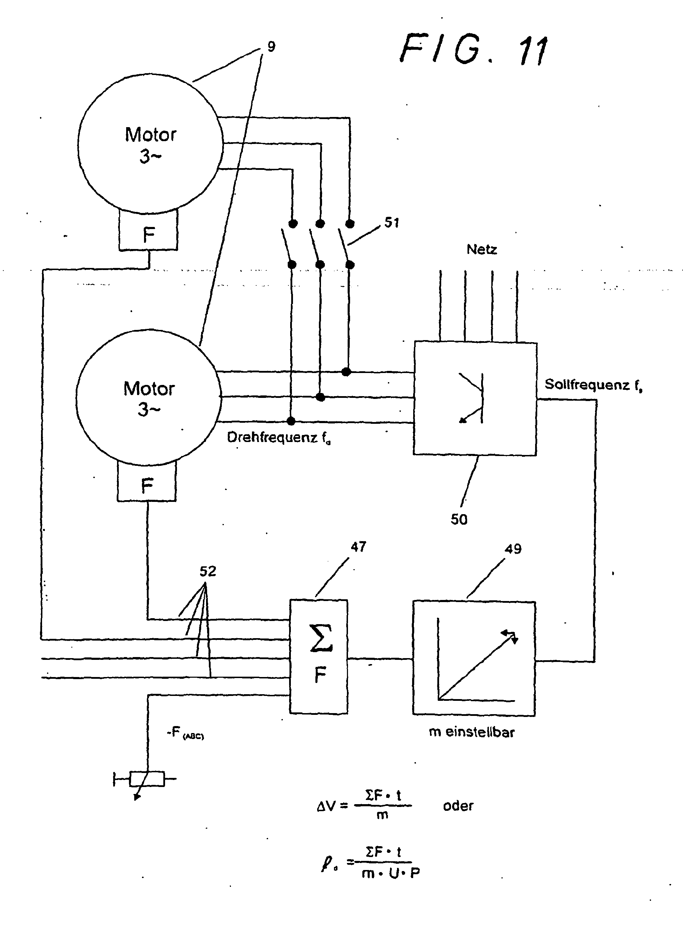

Im folgenden wird die Regelung bzw. Steuerung der Antriebsmaschinen der vorstehend beschriebenen Prüfstände anhand der Figuren 10, 11 erläutert.

Ein in Fig. 10 links schematisch dargestellter Fahrwiderstandssimulator 57 errechnet passend zur Fahrgeschwindigkeit die für das jeweilige Prüffahrzeug ausgewählte Belastung. Zusätzlich wird aus einer Geschwindigkeitsänderung, beispielsweise einer Beschleunigung, ein Signal erzeugt, das sich aus der Differenz der gewünschten zu simulierenden Masse und der Grundmasse der drehenden Bauteile des Prüfstandes multipliziert mit der Beschleunigung entsprechend der dargestellten Gleichung errechnet. Diese Fahrwiderstandswerte werden in einem Addierglied 58 addiert, dessen Ausgangsgröße die Soll-Kraft für einen Fahrwiderstandsregler 56 darstellt.

In einem Subtrahierer 49 wird die vom Fahrwiderstandssimulator 57 ermittelte Soll-Kraft mit den von den Kraftmeßdosen 20 erzeugten Ist-Kräften verglichen, welche in einem Addierer 60 summiert werden. Das Differenzsignal F-Soll minus F-Ist wird auf den Fahrwiderstandsregler 56 geschaltet, dessen Stellgröße $Y_f$ die Stellgröße für die Antriebsmaschinen 9 darstellt. Von zwei Geschwindigkeitssensoren 31, 32, die z.B. die Drehgeschwindigkeit der jeweiligen Welle des ersten bzw. zweiten Prüfsatzes erfassen, wird ein Mittelwert 62 für die Geschwindigkeit in einem Addierglied 61 errechnet. Diese Geschwindigkeitssensoren 31, 32 sind vorzugsweise als Sinus-/Cosinus-Geber ausgeführt, so daß aus diesen Sensorsignalen die Winkel der jeweiligen Antriebswelle 33 gemessen werden können. In einem Vergleicher 52 wird die Winkeldifferenz der beiden $_M$otorwellen 33 durch Subtraktion errechnet. Diese Winkeldifferenz wird auf den Regler 53 geschaltet. Der Ausgang des Reglers 53 wird nun bei der Trommel für die Vorderräder zum Stellsignal des Fahrwiderstandsreglers 56 im Knoten 54 addiert. Gleichzeitig wird das Stellsignal des Reglers 53 mit dem Stellsignal des Reglers 56 im Subtrahierer 55 subtrahiert. Das dadurch auf der einen Seite aufaddierte Drehmomentsignal wird auf der anderen Seite abgezogen, so daß das vom Fahrwiderstandsregler 56 erzeugte Regelsignal in der Summe unverändert bleibt.

Die in Fig. 11 dargestellte Regelung für die Synchronmaschinen benötigt keine Inkrementalgeber oder Tachogeneratoren als Geschwindigkeitsmeßeinrichtungen. Die Kräfte F der Antriebsmaschinen 9 und die eingestellten Fahrwiderstände $F_{abc}$ werden in einem Summierglied 47 addiert und die sich ergebende Summe wird durch die zu simulierende einstellbare Masse m im Glied 49 dividiert, wodurch eine Trommelumfangsgeschwindigkeit erhalten wird. Die so errechnete Soll-Geschwindigkeit wird entsprechend den jeweiligen Trommeldurchmessern in eine Wellendrehzahl und entsprechend der Polpaarzahl der verwendeten Synchronmaschinen 9 über einen oder mehrere Frequenzinverter in eine Ausgangsfrequenz umgesetzt, mit der die Synchronmaschinen 9 angesteuert werden. Der Drehwinkel aller Antriebsmaschinen ist konstruktionsbedingt fest mit der Betriebsfrequenz gekoppelt. Dadurch entfällt die sonst übliche Messung der Geschwindigkeit. Die erforderliche Erregerleistung für die Synchronmaschinen kann über Schleifringe zugeführt werden, wobei die Synchronmaschinen auch über eine permanente Erregung verfügen können. Schließlich kann den Synchronmaschinen zusätzlich zur permanenten oder Fremderregung eine Kurzschlußwicklung zugeordnet sein, die zur Unterdrückung der bei Synchronmaschinen üblichen Pendelschwingungen dient.

Gemäß der Formeln in Fig. 11 errechnet sich die Prüfgeschwindigkeit aus der Summe aller Kräfte, dividiert durch die zu simulierenden Massen. Aus dieser errechneten Prüfgeschwindigkeit wird entsprechend dem Durchmesser der von den Synchronmaschinen angetriebenen Trommeln 3 und der Polpaarzahl dieser Synchronmaschinen eine Sollfrequenz fs errechnet, die über den Frequenzinverter 50 in ein Drehstromsignal mit einer der Soll-Frequenz entsprechenden Drehfrequenz $f_D$ umgewandelt wird. Die Antriebs-Synchronmaschinen 9 werden an diesem Frequenzinverter 51 parallel betrieben. Die Umschaltung von Zwei-Rad- auf Vier-Rad-Betrieb ist einfach mit einem Kontaktschalter 51 möglich. Die Messung der tatsächlichen Trommelgeschwindigkeiten ist nicht erforderlich, da die Soll-Frequenz durch die direkte Kopplung der Synchronmaschinen 9 an die Drehfrequenz keine Abweichung erlaubt, d.h. die in der in Fig. 11 dargestellten Formel berechnete Soll-Geschwindigkeit entspricht gleichzeitig der tatsächlichen Ist-Geschwindigkeit.

Auf den vorstehend beschriebenen Trommelprüfständen werden Untersuchungen und Tests auch bei extrem hohen und extrem niedrigen Temperaturen z.B. in Klimakammern durchgeführt, um die Eigenschaften und das Betriebsverhalten der Kraftfahrzeuge und deren Einzelkomponenten bei extremen Klimabedingungen zu erfassen. Damit auch unter diesen Verhältnissen praxisgerechte Ergebnisse erzielt werden können, kann die jeweilige Umgebungstemperatur und auch der herrschende Luftdruck als Einflußgrößen in die Simulation mit einbezogen werden. Damit wird die Tatsache berücksichtigt, daß die Verlustkennlinie bei dem Prüfstand im wesentlichen von den sogenannten Ventilationsverlusten bestimmt wird, da bei diesem Prüfstand praktisch keine anderen Verlustkomponenten z.B. aus Lagerreibung oder dergleichen auftreten. Diese Ventilationsverluste sind direkt proportional zur Luftdichte, die wiederum aus der Temperatur und dem herrschenden Luftdruck berechnet wird. Zur Einbeziehung der Luftdichteänderungen in die praxisecht simulierte Ventilationsverluste wird in einem Kalibrier- bzw. Eichbetrieb der Prüfstand unter vorgegebenen Bedingungen bei Normaltemperatur und normalem Luftdruck betrieben und die Werte der erfaßten Ventilationsverluste für die jeweiligen Geschwindigkeiten werden abgespeichert. Wenn ein Prüfbetrieb unter anderen Temperatur- oder Luftdruckverhältnissen durchgeführt wird, können dann die sich ändernden Ventilationsverluste auf der Grundlage der abgespeicherten Werte bestimmt und als Simulationsparameter mit berücksichtigt werden.

**Patentansprüche**

1.  Prüfstand für Kraftfahrzeuge mit

    - mindestens einer Laufrolle bzw. Trommel (3) für jedes Rad mindestens einer Achse des zu prüfenden Fahrzeuges,
    - mindestens einer elektrischen Maschine (9) zum direkten Antreiben oder Verzögern der Trommel (3), deren Statorgehäuse (9a) in einem Tragrahmen (6) pendelnd gelagert und über einen Kraftmesser (20) an diesem Tragrahmen (6) abgestützt ist, und
    - einer mit einem Fahrsimulator zum Einstellen spezifischer Fahrzeugdaten und zur Simulation von ausgewählten Fahrzuständen verknüpften Steuereinheit für die Antriebsmaschinen, wobei
    - das Statorgehäuse (9a) der jeweiligen Antriebsmaschine (9) und die Trommel (3) über eine Lageranordnung (15-18; 72-78) im Tragrahmen (6) gelagert ist,

    **dadurch gekennzeichnet, dass**

    - die Lageranordnung (15-18; 72-78) Lagerschalen (15, 18; 73, 75) mit darin eingearbeiteten Druckflüssigkeitstaschen (16, 17; 77, 78) enthält, und
    - regelbare Dosierglieder (22) vorhanden sind, die zur Erzeugung eines in etwa volumenkonstanten Druckölstroms für die Druckflüssigkeitstaschen (16, 17; 77, 78) unabhängig von der Stützlast eingerichtet sind, und
    - die Lageranordnung (15-18; 72-78) jeweils ein mit Druckflüssigkeit beaufschlagbares tragendes Radialdrucklager (14, 16; 71, 73) für eine Stirnwand (9b, 9c) des Statorgehäuses (9a) und mindestens ein mit Druckflüssigkeit beaufschlagbares seitliches Axialdrucklager (17, 18; 74, 75, 78) aufweist.

**2.** Prüfstand nach Anspruch 1, **dadurch gekennzeichnet, dass** an den Stirnwänden (9b, 9c) des Statorgehäuses (9a) beidseitig abstehende Hülsen (14; 70) befestigt sind, welche einen Lagerring (71) des jeweiligen Gleitlagers tragen.

**3.** Prüfstand nach Anspruch 1 oder 2, **dadurch gekennzeichnet, dass** den Lagern (15, 18) Regelelemente in Form von Drosselventilen oder Kapillaren zugeordnet sind, die bei Druckdifferenzen zwischen Ein- und Ausgang vernachlässigbare Volumenstromänderungen aufweisen.

**4.** Prüfstand nach einem der Ansprüche 1 bis 3, **dadurch gekennzeichnet, dass** regelbare Dosierglieder (22) zum Anschluss der Druckflüssigkeitstaschen (16, 17; 77, 78) an eine Druckflüssigkeitsversorgung (42 - 47), die zumindest einen Druckerzeuger (42, 43) und Stellglieder (45) enthält, vorgesehen sind.

**Claims**

**1.** A testing stand for motor vehicles, comprising

- at least one roller or drum (3) for each wheel of at least one axle of the vehicle to be tested,
- at least one electrical machine (9) for directly driving or decelerating said drum, the stator housing (9a) of which being carried in an oscillating manner within a supporting frame (6) and being supported via a force sensing device (20) on said supporting frame (6), and
- a controller for the driving machines coupled to a driving simulator for adjusting specific vehicle data and for simulating selected driving conditions, wherein
- said stator housing (9a) of the respective driving machine (9) and said drum (3) are supported via a bearing assembly (15-18; 72-78) within said supporting frame (6),

**characterized in that**

- said bearing assembly (15-18; 72-78) includes bearing shells (15, 18; 73, 75) comprising pockets (16, 17; 77, 78) for pressurized liquid incorporated therein, and
- controllable metering members (22) are provided and set up to create a flow of pressurized liquid with approximately constant volume for said pockets (16, 17; 77, 78) for pressurized liquid independently of the supported load, and
- said bearing assembly (15-18; 72-78) comprises a respective radial pressure support bearing (14, 16; 71, 73) for an end surface (9b, 9c) of said stator housing (9a) capable of being subjected to pressurized liquid, and at least one respective lateral axial pressure bearing (17, 18; 75, 78) capable of being subjected to pressurized liquid.

**2.** The testing stand according to claim 1, **characterized in that** sleeves (14; 70) are attached to said end surfaces (9b, 9c) of said stator housing (9a) such that they project from both sides, and carry a bearing ring (71) of the respective slide bearing.

**3.** The testing stand according to claim 1 or 2, **characterized in that** said bearings (15, 18) are associated with control members having the form of throttle valves or capillaries presenting neglectable volume flow variations in the presence of pressure differences between input and output.

**4.** The testing stand according to one of the claims 1 to 3, **characterized in that** controllable metering members (22) are provided for connecting said pockets (16, 17; 77, 78) for pressurized liquid to a supply (42-47) for pressurized liquid including at least a pressure generator (42, 43) and actuators (45).

**Revendications**

**1.** Banc d'essai pour véhicules automobiles comportant :

- au moins un galet de roulement ou un tambour (3) pour chaque roue d'au moins un essieu du véhicule à contrôler,
- au moins une machine électrique (9) pour entraîner directement ou ralentir le tambour (3), dont le carter de stator (9a) est monté sur palier oscillant dans un châssis porteur (6) et est supporté sur ce châssis porteur (6) par l'intermédiaire d'un dynamomètre (20), et
- une unité de commande pour les machines d'entraînement, reliée à un simulateur de conduite pour ajuster des données spécifiques relatives au véhicule et pour simuler des états de conduite sélectionnés,
- le carter de stator (9a) de chaque machine d'entraînement (9) et le tambour (3) étant montés dans le châssis porteur (6) par l'intermédiaire d'un agencement de paliers (15 à 18 ; 72 à 78),

**caractérisé en ce que**

- l'agencement de paliers (15 à 18 ; 72 à 78) contient des coquilles de coussinets (15, 18 ; 73, 75), des poches de liquide sous pression étant incluses à l'intérieur de celles-ci (16, 17 ; 77, 78), et
- des organes de dosage régulables (22) sont présents, lesquels sont adaptés pour produire un écoulement d'huile sous pression à volume sensiblement constant pour les poches de liquide sous pression (16, 17 ; 77, 78) indépendamment de la charge d'appui, et
- l'agencement de paliers (15 à 18 ; 72 à 78) comporte respectivement un palier porteur à charge radiale (14, 16 ; 71, 73), sur lequel du liquide sous pression peut être appliqué, pour une paroi latérale (9b, 9c) du carter de stator (9a), et au moins un palier latéral à charge axiale (17, 18 ; 74, 75, 78) sur lequel du liquide sous pression peut être appliqué.

2. Banc d'essai selon la revendication 1, **caractérisé en ce que** des douilles (14 ; 70) faisant saillie des deux côtés sont fixées aux parois latérales (9b, 9c) du carter de stator (9a), lesquelles douilles portent une bague de palier (71) du palier lisse respectif.

3. Banc d'essai selon la revendication 1 ou 2, **caractérisé en ce que** des éléments de régulation ayant la forme de soupapes d'étranglement ou de tubes capillaires sont associés aux paliers (15, 18), lesquels éléments de régulation indiquent des variations négligeables de débit volumétrique en cas de différences de pression entre l'entrée et la sortie.

4. Banc d'essai selon l'une quelconque des revendications 1 à 3, **caractérisé en ce que** des organes de dosage régulables (22) sont prévus pour raccorder les poches de liquide sous pression (16, 17 ; 77, 78) à une alimentation en liquide sous pression (42 à 47) contenant au moins un générateur de pression (42, 43) et des organes de régulation (45).

FIG.2

FIG.1

FIG. 3

FIG. 4

# FIG. 5

# FIG. 6

# FIG. 7

FIG. 8

FIG. 9.

EP 1 039 282 B2

# FIG. 10

$$F_{Soll} = F_{ABC} + m * \frac{dv}{dt}$$

EP 1 039 282 B2

# FIG. 11

$$\Delta V = \frac{\Sigma F \cdot t}{m} \qquad \text{oder}$$

$$\rho_a = \frac{\Sigma F \cdot t}{m \cdot U \cdot P}$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5452605 A
- US 5522257 A
- DE 3920277 B
- DE 19716782 A1